# EUROPÄISCHE PATENTSCHRIFT

(11) **EP 1 966 280 B1**
(45) Veröffentlichungstag und Bekanntmachung des Hinweises auf die Patenterteilung: **31.10.2018**
(21) Anmeldenummer: 06830662.0
(22) Anmeldetag: 15.12.2006
(51) Int. Cl.: C08G 69/26, C08L 77/00, G02B 1/04, A47G 19/02, C08G 69/08, C08G 69/14, C08G 69/32, C08L 77/02, C08L 77/06

(54) **VERNETZTE TRANSPARENTE POLYAMIDFORMTEILE**
CROSSLINKED TRANSPARENT POLYAMIDE MOLDED PARTS
PIÈCES MOULÉES RÉTICULÉES TRANSPARENTES À BASE DE POLYAMIDE

(30) Priorität: 23.12.2005 EP 05112894
(43) Veröffentlichungstag der Anmeldung: 10.09.2008
(73) Patentinhaber: EMS-CHEMIE AG, 7013 Domat-Ems (CH)
(72) Erfinder: STEFFNER, Klaus-Jürgen, CH-7013 Domat/Ems (CH)
(74) Vertreter: OK pat AG
(86) Internationale Anmeldenummer: PCT/EP2006/069771
(87) Internationale Veröffentlichungsnummer: WO 2007/074086

(56) Entgegenhaltungen:
- EP-A- 0 046 954
- EP-A- 1 465 308
- JP-A- 2003 327 726
- US-A- 5 411 663

## Beschreibung

Die Erfindung betrifft gemäss dem Oberbegriff des unabhängigen Anspruchs 1 vernetzte, aus einer thermoplastischen Polyamidformmasse hergestellte, transparente Polyamidformteile, wobei die Polyamide ausgewählt sind aus einer Gruppe, die aus amorphen oder mikrokristallinen Polyamiden, aus Copolyamiden derselben und deren Blends sowie aus Blends aus solchen Polyamiden mit teilkristallinen Polyamiden besteht.

Das Bereitstellen von Polyamidformmassen zum Herstellen von transparenten Polyamidformteilen mit guter Transparenz, chemischer Resistenz und hoher dynamischer Belastbarkeit ist aus der deutschen Offenlegungsschrift DE 102 24 947 A1 bekannt. Mit solchen Polyamidformmassen hergestellte Polyamidformteile weisen einen Schmelzpunkt von 233-239 °C auf. Für den Einsatz bei Temperaturen von über 250 °C sind solche Polyamidformteile schon wegen dieses Schmelzpunktes nicht geeignet.

Durch Vernetzen der Polyamide mittels hochenergetischer Elektronen-Strahlung gelang es erstmals, die Löslichkeit eines vorgeformten Polyamidbauteils in heissem Paracresol und dessen temperaturbedingte Anfälligkeit auf plastische Deformation ("plastic flow") bei Temperaturen von über 250 °C zu senken (vgl. US 2,858,259).

Aus der internationalen Patenanmeldung WO 03 /037968 A1 ist bekannt, dass aus kristallinen Thermoplasten mittels Strahlenvernetzen hergestellte Formteile eine Wärmeformbeständigkeit aufweisen, die kurzzeitig Temperaturen wiederstehen können, welche bei Lötprozessen entstehen. Diese thermische Widerstandsfähigkeit wurde erreicht, indem mittels Elektronenstrahlbeschuss an der Oberfläche der Bauteile ein wesentlich höherer Vernetzungsgrad als im Inneren dieser Bauteile erzielt wurde. Als Vernetzungsmittel wurde unter anderem TAIC (Triallylisocyanurat) verwendet.

Die Verwendung von TAIC (Triallylisocyanurat) ist ebenfalls aus EP 0 007 114 B1 bekannt. Dort wird für die Herstellung von Polyamidfolien offenbart, wie die Vernetzungsreaktion mit den zweiwertigen, aromatischen Resten des aromatischen Polyamids abläuft, dessen Polymere stets wiederkehrende Einheiten mit solchen zweiwertigen, aromatischen Resten aufweisen. Das Dokument offenbart sowohl eine erhöhte Temperaturresistenz als auch verbesserte elektrische Eigenschaften.

Aus der japanischen Patentanmeldung JP 2003/327726 A2 ist ebenfalls bekannt, dass aus strahlenvernetzten Polyamiden hergestellte Formteile eine Wärmeformbeständigkeit aufweisen, die während 60 Sekunden Temperaturen von 260 °C wiederstehen können, welche bei Lötprozessen entstehen. Diese thermische Widerstandsfähigkeit wurde erreicht, indem das Vernetzen mittels Ionenstrahlbeschuss erzielt wurde. Allerdings mussten ein bromhaltiges Flammschutzmittel, ein Antimon-basiertes Flammschutz-Hilfsmittel und als weiteres Hilfsmittel eine Tonerde (Hydrotalzit) der Schmelze beigemischt werden.

Keines der zitierten Dokumente gibt dem Fachmann Hinweise über die Farbe bzw. die Transparenz der hergestellten Polyamidformteile.

Aus US 5,411,663 sind vernetzbare, alkohol-unlösliche und transparente Polyamidzusammensetzungen bekannt, die aus amorphen, linearen und alkohollöslichen Polyamidpolymeren (Typ 8 Nylon) mittels einem Vernetzungsadditiv hergestellt werden. Dabei vernetzen die Polymere untereinander durch säurekatalysierte Molekülinteraktion.

Aus EP 1 465 308 ist eine weitere vernetzbare, transparente Polyamidzusammensetzung bekannt, die wenigstens ein amorphes lineares Polyamid und ein Vernetzungsadditiv enthält. Die Materialzusammensetzung umfasst mindestens eine Abriebkomponente und eine Weich- und/oder Rückschrumpfkomponente. Dabei weist die Abriebkomponente in Form eines Thermoplasts einen Schmelzpunkt oder Tg auf, der grösser ist als 130 °C. Die Weich- und/oder Rückschrumpfkomponente dagegen ist ein Thermoplast mit einem Schmelzpunkt oder Tg ≤ 130 °C.

Aus EP 0 046 954 sind weitere transparente Polyamidzusammensetzungen bekannt, die ein Polyamid und ein Vernetzungsadditiv enthalten. Das aromatische Polyamid enthält jeweils eine organische Siliziumverbindung, welche bevorzugt in der Form X'Si(OR')₃ als Silankopplungsmittel zugegeben wird. Dabei stellt X' eine organische funktionelle Gruppe und R' einen Alkylrest dar. Die Herstellung von Formteilen erfolgt stets aus einer Lösung der aromatischen Polyamide in einem geeigneten Lösungsmittel; diese Formulierungen sind deshalb nicht thermoplastisch verarbeitbar. Eine Hitzebehandlung bei über 200 °C erhöht die Transparenz der Produkte durch eine Reaktion zwischen den aromatischen Polyamiden und der Siliziumverbindung.

Der vorliegenden Erfindung liegt die Aufgabe zu Grunde, alternative vernetzbare Polyamidformmassen vorzuschlagen, welche die Produktion von vernetzten transparenten Formteilen erlauben, die auf Grund der Vernetzung deutlich verbesserte mechanische, chemische und thermische Eigenschaften besitzen.

Diese Aufgabe wird erfüllt, indem zur Herstellung der Polyamidformteile eine vernetzbare Polyamidformmasse gemäss den Merkmalen des unabhängigen Anspruchs 1 vorgeschlagen wird. Dabei sind die Polyamide aus einer Gruppe ausgewählt, die aus amorphen oder mikrokristallinen Polyamiden, aus Copolyamiden derselben und deren Blends sowie Blends aus solchen Polyamiden mit teilkristallinen Polyamiden, besteht. Die erfindungsgemässen Polyamidformteile sind dadurch gekennzeichnet, dass sie einen transparenten Blend aus transparenten amorphen oder transparenten mikrokristallinen Polyamiden bzw. aus Copolyamiden derselben und bis zu 40 Gew.-% eines teilkristallinen Polyamids und ein Vernetzungsadditiv umfassen, das wegen einer energiereichen Bestrahlung mit den Polyamiden vernetzt ist. Die vernetzten, aus dieser Polyamidformmasse geformten Formteile weisen einen Tg-Wert von > 140 °C und bei Temperaturen von ≥ 180 °C eine Formbeständigkeit von mindestens 90 % auf, wobei diese Polyamide einen im wesentlichen linearen Aufbau und deren Monomere keine olefinischen C=C - Doppelbindungen aufweisen, und wobei eine Transmission für eine Wellenlänge von 540 nm mindestens 70 % beträgt, wenn ein Polyamidformteil in Form eines Plättchens mit einer Dicke von 2 mm vorliegt.

Weitere bevorzugte vernetzte transparente Polyamidformteile ergeben sich aus den abhängigen Ansprüchen.

Im Zusammenhang mit der vorliegenden Erfindung bezeichnet der Begriff "Transparente Polyamide" (Co)Polyamide bzw. (Co)Polyamidformmassen, deren Lichttransmission mindestens 70 % beträgt, wenn das Polyamid in Form eines Plättchens mit einer Dicke von 2 mm vorliegt. Rundplatten von 70 x 2 mm werden auf einer Arburg Spritzgussmaschine im polierten Werkzeug hergestellt, wobei die Zylindertemperatur zwischen 240 und 340 °C und die Werkzeugtemperatur zwischen 20 und 140 °C liegt. Die Messung der Lichttransmission wird standardmässig auf einem UV/VIS-Spektrometer der Firma Perkin-Elmer im Bereich von 200 bis 800 nm an solchen Rundplatten der Dimension 70 x 2 mm ausgeführt. Der Transmissionswert wird jeweils für eine Wellenlänge von 540 nm angegeben.

Ein erstes Anwendungsgebiet der vorliegenden Erfindung betrifft das Herstellen von opto-elektronischen Bauteilen. Der Forderung nach einer effizienteren Produktionsweise von elektronischen Schaltungen kann nämlich insbesondere dann nachgekommen werden, wenn die einer Leuchtdiode (LED) zugeordnete optische Linse vor dem Kontaktieren dieser LED auf der Leiterplatte montiert werden kann. Ein solches Vorgehen bedingt jedoch, dass die Linse während dem Löten einer Temperatur von ca. 260 °C ausgesetzt ist. Zum Kern der vorliegenden Erfindung gehören somit optische Bauteile aus vernetztem Polyamid. Hierbei ist es von hoher Bedeutung, dass die guten optischen Eigenschaften der transparenten Polyamide auch in vernetztem Zustand weitgehend erhalten bleiben.

Eine besonders interessante Anwendung für transparente Kunststoffe stellt beispielsweise die Aufsatzlinse für LED dar, die zur Zeit aus Polycarbonat gefertigt wird. Diese Linse sorgt für eine verbesserte Lichtabgabe bzw. eine erhöhte Lichtauswertung der LED. Weil Polycarbonate Temperaturen, die zum Löten notwendig sind, nicht ertragen, führt diese Temperatureinwirkung während des Lötens unweigerlich zu einem Verzug der Polycarbonatlinse. Deshalb müssen diese LED samt Linse mit Leitkleber an den Leiterplatten befestigt werden. Einerseits wird dieser Prozessschritt nicht von allen Herstellern wirklich beherrscht und andererseits verteuert dieser Prozessschritt die Herstellung von LED-bestückten Leiterplatten mit optischen Linsen für diese LED. Beide Umstände behindern die Verbreitung dieser an sich gewünschten und in ihrer technischen Anwendung stark wachsenden Technologie.

Die Glasübergangstemperatur (Tg) der im Handel erhältlichen, transparenten Polyamide, welche für den genannten optischen Verwendungszweck geeignet wären, wurde gemäss EP 0 837 087 B1 mit 157 °C ermittelt und liegt heute bei maximal 215 °C. Deshalb können herkömmliche Polyamide trotz der sehr guten optischen Eigenschaften der Linsen mit einer Dichte von ≤ 1.1 g/cm³, mit einem Brechungskoeffizienten von n_{D}²⁰ ≥ 1.50 und mit einer Abbe-Zahl von > 40 (vgl. EP 0 837 087 B1) nicht verwendet werden.

Solche LEDs, ausgestattet mit einer Aufsatzlinse werden für die Herstellung der Hintergrundbeleuchtung bei Flach- oder "Flat-Panel-" Bildschirmen eingesetzt.

Polyamidformmassen von spritzgegossenen Linsen aus einer Mischung von transparentem Polyamid und 1-10 % TAIC wurden unter Elektronenbestrahlung vernetzt. Derart hergestellte erfindungsgemässe Linsen für LED überstehen den bleifreien Lötprozess, der bei Temperaturen von bis über 250 °C ausgeführt wird, im wesentlichen ohne bzw. mit nur wenig Verzug und ohne Blasenbildung. Es hat sich herausgestellt, dass durch den Zusatz von Vernetzungsagenzien, insbesondere TAIC, die Verarbeitungstemperatur im Spritzguss (abhängig von Konzentration und Typ) um bis zu 30 °C gegenüber dem reinen Polyamid reduziert werden kann. Daraus resultiert eine durchaus wünschbare Verminderung bzw. ein Unterbinden der Vergilbung solcher Linsen. Vorzugsweise wird der gesamte Zyklus von der Spritzgussverarbeitung, über das Bestrahlen bis zum Reflow-Löten in einer inerten, sauerstofffreien Atmosphäre durchgeführt, so dass eine Vergilbung zumindest weitgehend vermieden werden kann.

Ein weiteres Anwendungsgebiet der vorliegenden Erfindung betrifft das Herstellen von strukturellen Bauteilen, wie z.B. Behälter, Schalen und/oder Deckel zur Aufnahme bzw. zum Abdecken von medizinischen Instrumenten während und allenfalls nach der Sterilisation. Insbesondere für die Heissluftsterilisation in Autoklaven wird eine Mindesttemperaturverträglichkeit von 200 °C vorausgesetzt (vgl. Wissenschaftliche Stellungnahme der Deutschen Gesellschaft für Zahn-, Mund- und Kieferheilkunde in der Version 2.0 vom Mai 2000). Ebenso können mit den erfindungsgemäss vernetzten, transparenten Polyamiden unzerbrechliches Essgeschirr aber auch transparente Tellerdeckel für die Verwendung in Mikrowellenkochgeräten hergestellt werden.

Wie beschrieben, sind erfindungsgemäss hergestellte Polyamidformteile optische Bauteile z.B. optische Linsen für LED, welche vor dem Kontaktieren der LED und/oder anderer elektronischen Bauteile mittels bleifreiem Löten an einer Leiterplatte befestigt werden. Damit die optische Funktion dieser Linsen aufrecht erhalten bleibt, müssen diese zu mindestens 90 %, vorzugsweise aber zu mindestens 95 % ihre Transparenz und ihre Formbeständigkeit behalten. Solche Linsen müssen den Vorgang des bleifreien Lötens also im wesentlichen ohne Verzug und ohne Blasenbildung überstehen. Auch das für optische Bauteile bedeutende Haze wird durch die Bestrahlung, Konditionierung oder das Reflow-Löten nur wenig oder gar nicht beeinflusst, so dass reflowgelötete Formteile einen kleinen Haze von bevorzugt ≤ 1.0 aufweisen. Erfindungsgemäss hergestellte Polyamidformteile können aber auch andere optische Linsen bzw. Frontscheiben und weitere transparente Bauteile, wie z.B. optische Elemente oder Beleuchtungseinsätze von medizinischen Endoskopen sein, die thermisch resistent für die Anwendung von wiederholten Sterilisierungen, vorzugsweise für die Anwendung der Heissluftsterilisation bei mindestens 200 °C sein müssen.

Als weiteres Anwendungsgebiet ist die Fahrzeugherstellung zu nennen, bei der eine thermoplastische Polymer-Formmasse zum Herstellen von für Betriebstemperaturen von mindestens 180 °C geeigneten, metallisch beschichteten Lichtreflektierbauteilen auf der Basis von Thermoplasten verwendet wird. Solche Formmassen umfassen Polyamide, die ausgewählt sind aus einer Gruppe, welche aus Homopolyamiden, Copolyamiden sowie Mischungen (Blends) aus Homopolyamiden und Copolyamiden und Mischungen aus Homopolyamiden oder Copolyamiden besteht, wobei diese Polyamide ausgewählt sind aus einer Gruppe, die amorphe und transparente Polyamide umfasst, und wobei diese Polyamide eine Glasübergangstemperatur (Tg) von mindestens 180 °C aufweisen. Dabei kann die erfindungsgemäss vernetzte, transparente Polyamidformmasse zum Herstellen der hochtemperaturbeständigen Tragschicht solcher Lichtreflektierbauteile verwendet werden. Es können dabei kostengünstige Polyamide eingesetzt werden, die beispielsweise eine Glasübergangstemperatur von nur 140 °C (im trockenen Zustand) aufweisen, die sich aber dank ihrer niedrigen Viskosität speziell gut zum Spritzgiessen eignen. Durch den Zusatz von Vernetzungsagenzien, insbesondere TAIC, können die Spritzgussbauteile anschliessend vernetzt und damit deren kurzfristige Gebrauchstemperatur bis auf Werte von über 250 °C erhöht werden. Als Schutzschicht für die Reflexionsschicht (die normalerweise aus Aluminium besteht) in solchen Lichtreflektierbauteilen kann eine dünne Schicht der erfindungsgemässen, vernetzten Polyamidformmasse aufgespritzt oder als Folie auflaminiert werden.

Vorteilhaft ist zudem, dass die vernetzten transparenten Formteile eine im Vergleich zu unvernetzten Formteilen deutlich bessere Beständigkeit gegenüber Chemikalien und Lösungsmitteln aufweisen.

Im Zusammenhang mit der vorliegenden Erfindung werden "olefinische Monomere" so definiert, dass diese isolierte bzw. konjugierte C=C - Doppelbindungen enthalten, welche radikalisch oder ionisch polymerisierbar sind. Es ist allgemein bekannt, dass C=C - Doppelbindungen in Olefinen (d.h. in Alkenen und Cycloalkenen) eine deutlich höhere Reaktivität gegenüber aromatischen Systemen aufweisen und daher unter den Bedingungen einer energiereichen Bestrahlung, wie z.B. einer Elektronenbestrahlung Anlass für spontane Vernetzungsreaktionen geben.

Aromatische Verbindungen haben eine deutlich höhere chemische Beständigkeit und gehen vor allem bevorzugt solche Reaktionen ein, bei der die aromatische Struktur erhalten bleibt. Aromaten gelten unter anderem auch als besonders strahlungsstabil. Die Vernetzungswirkung ist bei gleicher Strahlendosis und Zeit deutlich geringer als z.B. bei Aliphaten.

Daher werden für die erfindungsgemässen vernetzbaren und thermoplastisch verarbeitbaren Polyamidformmassen ausschliesslich Polyamide mit aliphatischem und/oder cycloaliphatischem und/oder teilaromatischem Charakter verwendet. Vollaromatische Polyamide gehen damit nicht in die Formmassen für die erfindungsgemässen Polyamidformteile ein.

Vernetzungsmittel sind polyfunktionelle, zumeist niedermolekulare Verbindungen. Diese Vernetzungsadditive fördern Vernetzungsreaktionen und weisen mindestens einen Rest mit der Formel (I), (II), (III) und/oder (IV) auf: 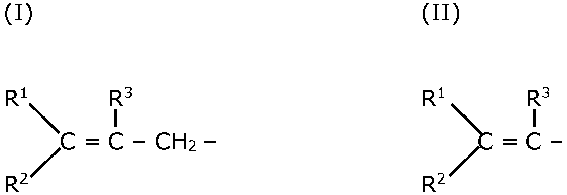 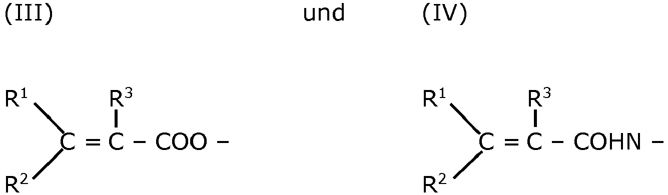 wobei R¹, R², bzw. R³ unabhängig voneinander Wasserstoff oder einen Alkylrest darstellen, welcher 1 bis 6 Kohlenstoffatome besitzt, oder die folgende Strukturformel (V) oder (VI) aufweist: 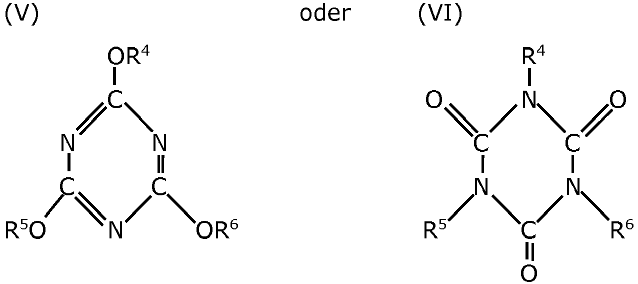 wobei R⁴, R⁵ bzw. R⁶ unabhängig voneinander Wasserstoff, einen Alkylrest mit 1 bis 10 Kohlenstoffatomen, einen Hydroxylalkylrest mit 1 bis 10 Kohlenstoffatomen, einen Carboxyalkylrest mit 1 bis 10 Kohlenstoffatomen oder einen halogenisierten Alkylrest mit 1 bis 10 Kohlenstoffatomen darstellen. Bevorzugte Beispiele solcher Vernetzungsmittel umfassen Triallylcyanurat, Triallylisocyanurat, Diallylcyanursäure, Tris(2-hydroxyethyl)-cyanursäure, Tris(2-carboxyethyl)cyanursäure, Diallylisophthalat, Diallylcarbonate (z.B. Diethylenglykol-bis(allylcarbonat), Diallylmaleat, Trimethylolpropantrimethacrylat, Ethylenglykoldimethacrylat und Divinylbenzen.

Die Vernetzer werden üblicherweise in Konzentrationen bis zu 10 Gew.-%, bevorzugt bis zu 7 Gew.-% und speziell bevorzugt bis zu 4 Gew.-%, eingesetzt. Bevor die formgebende Verarbeitung (z.B. Spritzguss oder Extrusion) durchgeführt wird, werden die Vernetzer auf das Granulat der verwendeten Polyamide aufgetragen, d.h. bevorzugt in Flüssigkeiten auf das Polyamid-Granulat aufgetrommelt oder im Trockenverfahren aufgepudert. Eine Möglichkeit speziell hohe Flüssigkeitsmengen zu dosieren ergibt sich auf der Basis sogenannter mikrogeschäumter Granulate (vgl. z.B. das im Markt erhältliche Produkt ACCUREL® der Firma Membrana GmbH, 63784 Obernburg, Deutschland). Bei diesem Vorgehen wird der Vernetzer in die Kavitäten des Hohlkammergranulats aufgenommen und haftet nicht wie im Fall von üblichem Granulat nur an der Oberfläche desselben. Es kommt allerdings vor, dass der Vernetzer nach einiger Zeit ins Innere der konventionellen Granulate diffundiert.

Als Transparente Polyamide kommen beispielsweise folgende Polyamid-Zusammensetzungen in Frage:
1. Ein Polyamid, das aufgebaut ist aus verzweigten oder unverzweigten, aliphatischen oder cycloaliphatischen Diaminen, bevorzugt aus PACM und/oder MACM und aus aliphatischen Dicarbonsäuren mit 8 bis 36 C-Atomen, wobei C10, C12, C13, C14 und C18 Dicarbonsäuren speziell bevorzugt sind. Solche Polyamide sind z.B. die Homopolyamide MACM12, MACM18, oder PACM12 oder die Copolyamide MACM12/PACM12, MACM18/PACM18.
2a. Polyamide mit aromatischen Dicarbonsäuren mit 8 bis 18 C-Atomen, wobei Terephthalsäure (TPS) und Isophthalsäure (IPS) bevorzugt sind. Die Diamine sind in diesem Fall bevorzugt aliphatisch oder cycloaliphatisch. Beispielhafte Polyamide sind 6I/6T, TMDT, 6I/MACMI/MACMT, 6I/PACMI/PACMT, 6I/6T/MACMI, MACMI/MACM36 und 6I.
2b. Polyamide mit Lactamen und/oder Aminocarbonsäuren als Monomeren. Beispielhafte Lactam haltige Polyamide sind 12/PACMI, 12/MACMI, 12/MACMT, 6/MACMT, 6/6I und 6/IPDT.
3. Polyamide mit Diamin, das einen aromatischen Kern besitzt, wie z.B. MXDA. Die Dicarbonsäuren haben eine aromatische und/oder aliphatische Struktur. Ein beispielhaftes Polyamid ist das Copolyamid 6I/MXDI.

Die Erfindung umfasst transparente Blends von transparenten (also amorphen oder mikrokristallinen) Polyamiden sowie transparente Blends von solchen transparenten Polyamiden mit teilkristallinen Polyamiden. Bevorzugte transparente Blends von transparenten Polyamiden mit teilkristallinen Polyamiden weisen eine Transmission von über 70 % auf und umfassen GRILAMID TR 90 (in der IUPAC-Nomenklatur als PA MACM12 bekannt) sowie bis zu 40 Gew.-% Polyamid 12 (PA 12). Besonders bevorzugte Blends umfassen GRILAMID TR 90 (bzw. PA MACM12) und bis zu 20 Gew.-% PA 12, dies als Beispiele für eine Polyamidformmasse für die Herstellung von erfindungsgemässen transparenten Polyamidformteilen gemäss den Ansprüchen 1 bis 3 mit Zusatz eines teilkristallinen Polyamids.

In einer besonderen Ausführungsform besitzen die erfindungsgemäss hergestellten und vernetzten Formteile eine Transmission von über 70%, bevorzugt von über 80% und insbesondere von über 85%. Solche transparenten Formteile weisen einen Haze von unter 7%, bevorzugt unter 5% und insbesondere unter 3% auf.

Wie das prinzipielle, aber nicht beanspruchte Beispiel 1 (siehe Tabelle 2) zeigt, lassen sich auf Basis hochreiner Rohstoffe auch qualitativ hochwertige optische Formkörper, wie z.B. Linsen herstellen, die nach erfolgter Vernetzung eine Transmission von über 88% und einen Haze von unter 1.5% aufweisen.

Linsen aus vernetzten Polyamiden des eben definierten Typs 1 weisen eine Dichte von ≤ 1.1 g/cm³, einen Brechungskoeffizienten von n_{D}²⁰ ≥ 1.50 und eine Abbé-Zahl von > 40 auf. Linsen aus vernetzten Polyamiden des eben definierten Typs 3 weisen eine Dichte von < 1.3 g/cm³, einen Brechungskoeffizienten von n_{D}²⁰ > 1.59 und eine Abbé-Zahl von > 25 auf. Linsen aus vernetzten Polyamiden der eben definierten Typen 2a und 2b weisen charakteristische Werte auf, welche zwischen den Extremwerten der Typen 1 und 3 liegen.

Bevorzugt werden Polyamidformmassen verwendet, mit welchen Polyamidformteile hergestellt werden können, die eine Glasüberganstemperatur (Tg) von mindestens 140 °C aufweisen. Bevorzugt wird ein Tg ≥ 150 °C, speziell bevorzugt ein Tg ≥ 170 °C.

Im folgenden wird die Erfindung bzw. das erfindungsgemässe Prinzip an Hand von Beispielen näher erläutert. Die Beispiele 1, 2, 3 und 6 sind aber nicht beansprucht, weil sie keine Blends umfassen, sondern mit einzelnen Polyamiden bzw. Copolyamiden durchgeführt wurden. Unter die beanspruchte Erfindung fallen hingegen die Beispiele 4 und 5 durch die Verwendung eines Blends aus zwei Polyamiden.

### Beispiel 1:

Auf das vorgetrocknete Granulat der ausgewählten Polyamide wurden jeweils 0, 2 oder 3 Gew.-% TAIC (TAICROSS® der Firma Degussa) aufgetragen und in einem Mischer während 60 Minuten aufgetaumelt. Mittels einer Arburg 305-210/210-700 Spritzgussmaschine wurden Probenkörper mit einer Grösse von 60 x 10 x 1 mm und Rundplatten mit einem Durchmesser von 70 mm und einer Dicke von 2 mm hergestellt. Für GRILAMID TR 90 (PA MACM12) lagen die Zylindertemperaturen im Bereich von 240 °C bis 280 °C und für TR FE5577 (PA 6I/MXDI) im Bereich von 260 °C bis 300 °C. An Hand der Prüfstäbe wurde die Vergilbung, die Blasenbildung und der Verzug qualitative beurteilt. Die Rundplatten, die mit Hilfe eines polierten Werkzeugs gefertigt wurden, dienten der Bestimmung der Transmission und des Haze.

Die Probekörper wurden spritztrocken in Aluminiumbeutel eingeschweisst und in dieser Form mit Elektronen bestrahlt. Die Bestrahlung mit Elektronen erfolgte bei der Firma Beta-Gamma-Service in Bruchsal (Deutschland) auf einer 10 MEV-Elektronenbeschleunigeranlage mit einer Strahlendosis von 33 kGy pro Durchlauf. Die höheren Dosen wurden durch mehrmaligen Durchlauf der Proben durch den Bestrahlungsbereich realisiert.

Nach dem Bestrahlen wurde die Probekörper direkt (trocken) oder nach Konditionierung (Joint Industry Standard: IPC/JEDEC J-STD-020C, Moisture Sensitive Level 2, July 2004) einem Reflow-Lötprozess unterworfen. Hierzu durchliefen die Probekörper in einem Vollkonvektions-Reflow-Lötofen ESSEMTEC 300 FC ein Temperatur/Zeit-Profil entsprechend der Norm IPC/JEDEC J-STD-020C. Dabei wurde die Peaktemperatur von 260 °C für mehr als 40 Sekunden aufrecht erhalten. Die Transmission wurde an Hand der Rundplatten bei einer Wellenlänge von 540 nm mittels eines PERKIN ELMER UV/VIS Spektrometers bestimmt. Die Haze-Werte wurden mit dem Gerät HAZE-GARD PLUS der Firma Byk-Gardener nach ASTM D1003 bestimmt.

Die Tabelle 1 fasst die Ergebnisse mit den trockenen und die Tabelle 2 diejenigen mit den konditionierten Prüfkörpern zusammen.

**Tabelle 1: Ergebnisse nach Reflowprozess (trocken, ohne Konditionierung)**

| Werkstoff | Bestrahlungsdosis [kGy] | 0 | | | 66 | | | 99 | | | 132 | | |
|---|---|---|---|---|---|---|---|---|---|---|---|---|---|
| | TAIC [%] | 0 | 2.0 | 3.0 | 0 | 2.0 | 3.0 | 0 | 2.0 | 3.0 | 0 | 2.0 | 3.0 |
| TR 90 | Vergilbung | ++ | ++ | ++ | + | + | + | + | + | + | + | + | + |
| | Blasenbildung | - | -- | -- | - | ++ | ++ | - | ++ | ++ | -- | ++ | ++ |
| | Verzug | -- | -- | -- | -- | + | + | -- | ++ | ++ | -- | ++ | ++ |
| | Transmission | nb | nb | nb | nb | 90 | 89 | nb | 90 | 89 | nb | 89 | 89 |
| | Haze | nb | nb | nb | nb | 0.8 | 0.8 | nb | 0.8 | 0.9 | nb | 0.8 | 0.9 |
| TR FE5577 | Vergilbung | + | + | + | + | + | + | ○ | ○ | ○ | ○ | ○ | ○ |
| | Blasenbildung | -- | -- | -- | -- | ○ | + | -- | + | ++ | -- | + | ++ |
| | Verzug | -- | -- | -- | -- | ○ | + | -- | + | ++ | -- | ++ | ++ |

**Tabelle 2: Ergebnisse nach Reflowprozess (nach Konditionierung gemäss Standard IPC/JEDEC J-STD-020C MSL2)**

| Werkstoff | Bestrahlungsdosis [kGy] | 0 | | | 66 | | | 99 | | | 132 | | |
|---|---|---|---|---|---|---|---|---|---|---|---|---|---|
| | TAIC [%] | 0 | 2.0 | 3.0 | 0 | 2.0 | 3.0 | 0 | 2.0 | 3.0 | 0 | 2.0 | 3.0 |
| TR 90 | Vergilbung | + | + | + | + | + | + | + | + | + | + | + | + |
| | Blasenbildung | -- | -- | -- | -- | + | ++ | -- | ++ | ++ | -- | ++ | ++ |
| | Verzug | -- | -- | -- | -- | ○ | + | -- | + | + | -- | + | ++ |
| | Transmission | nb | nb | nb | nb | 90 | 89 | nb | 89 | 89 | nb | 89 | 89 |
| | Haze | nb | nb | nb | nb | 0.8 | 0.9 | nb | 0.8 | 0.9 | nb | 0.8 | 1.0 |
| TR FE5577 | Vergilbung | + | + | + | ○ | ○ | ○ | ○ | ○ | ○ | ○ | ○ | ○ |
| | Blasenbildung | -- | -- | -- | -- | ○ | ○ | -- | ○ | ++ | -- | + | ++ |
| | Verzug | -- | -- | -- | -- | ○ | + | -- | + | ++ | -- | ++ | ++ |

Legende zu den Tabellen 1 und 2:

| | |
|---|---|
| Vergilbung: | ++ sehr gering (Δ Yellow-Index < 2), + (Δ Yellow-Index = 2-4) |
| | ○ (Δ Yellow-Index = 4-7) |
| | - (Δ Yellow-Index = 8-10), -- hoch (Δ Yellow-Index > 10) |
| Verzug: | ++ sehr geringer Verzug, -- starker Verzug |
| Blasenbildung: | ++ keine Blasen, + einzelne kleine Blasen, |
| | ○ wenige kleine Blasen, - deutliche Blasenbildung, |
| | -- gesamtes Formteil mit Blasen überzogen |
| nb: | nicht bestimmt |

Der Yellow-Index (Gelbindex) wurde mit dem Dr. Lange Color-Pen LMG 159 nach DIN 6167 bestimmt.

GRILAMID TR 90 hat vor dem Reflow-Löten einen Yellow-Index von 1.5, einen Haze von 0.8 % und eine standardmässig bei 540 nm bestimmte Transmission von 91 %. Der Yellow-Index von TR FE5577 ist 10.

Die Bestimmung des Gelanteiles erfolgte an Hand der Löslichkeit der bestrahlten Proben in für Polyamide geeigneten Lösungsmitteln. Der Gelanteil entspricht dem im Lösungsmittel unlöslichen Anteil der Probe und wird in Gew.-% angegeben. Als Referenz wurde jeweils das unbestrahlte Material überprüft, wobei der Gelanteil < 1 % ist. Der Gelanteil wurde für Proben aus GRILAMID TR 90 mit einem Gemisch aus Trifluorethanol und Chloroform im Verhältnis 3:2 bei 23 °C und für Proben aus GRILAMID TR FE5577 mit Benzylalkohol bei 180 °C (während jeweils 8 Stunden) bestimmt.

**Tabelle 3: Gelanteil der mit Elektronen bestrahlten Proben**

| Dosis [kGy] | 66 | | 99 | | 132 | |
|---|---|---|---|---|---|---|
| TAIC [%] | 2 | 3 | 2 | 3 | 2 | 3 |
| TR 90 | 78 | 90 | 89 | 96 | 92 | 98 |
| TR FE5577 | <1 | <1 | 5 | 25 | 40 | 55 |

### Beispiel 2:

GRILAMID TR 90 wurde auf einem an sich bekannten Werkzeug zum Spritzgiessen von optischen Linsen für LED, auf einer Spritzgussmaschine DEMAG Ergotech 35-120 mit einer 25 mm Schnecke verarbeitet. Das Werkzeug war ein elektrisch beheiztes 4-fach Werkzeug mit Kaltkanal und Punktanschnitten. Die Zylindertemperaturen betrugen zwischen 240 und 280 °C. Es standen folgende zwei Materialvarianten zur Verfügung:
A) GRILAMID TR 90 natur mit 3 Gew.-% TAIC (flüssig aufgetrommelt);
B) GRILAMID TR 90 natur mit 12 Gew.-% Masterbatch, bestehend aus 75 % GRILAMID TR 90 natur und 25 % TAIC

GRILAMID TR 90 (PA MACM12) mit flüssig aufgetrommeltem TAIC (Variante A) hat unmittelbar nach der Additivierung eine feucht-klebrige Konsistenz, lässt sich jedoch gut einziehen und verarbeiten. Variante B, bei der TAIC in Form eines Masterbatches zudosiert wird, zeigt ebenfalls ein unproblematisches Dosier- und Verarbeitungsverhalten.

Die LED-Linsen wurden auf ihre 3D-Abbildungsgenauigkeit im Verhältnis zum Formnest vermessen. Dabei stellten sich für beide GRILAMID TR 90 - Varianten extrem gute Werte heraus, wie sie bisher bei Kunststoff-Linsen noch nicht beobachtet werden konnten.

Die LED-Linsen wurden spritztrocken in Aluminiumbeutel eingeschweisst und in dieser Form mit Elektronen bestrahlt. Die Elektronenbestrahlung wurde, wie bereits in Beispiel 1 beschrieben, durchgeführt. Die Dosis betrug 99 kGy.

Die Varianten A und B wurde nach dem Bestrahlen entweder vorgetrocknet oder konditioniert (IPC/JEDEC J-STD-020C, Moisture Sensitive Level 2) dem Reflow-Lötprozess nach Standard IPC/JEDEC J-STD-020C in einem ESSEMTC 300FC - Lötofen unterzogen. Vergilbung, Blasenbildung und Verzug wurden wiederum qualitativ beurteilt und die Ergebnisse in Tabelle 4 aufgeführt.

**Tabelle 4: Qualitative Beurteilung der LED-Linsen nach dem Reflow-Löten**

| Werkstoff | Vergilbung | Blasenbildung | Verzug |
|---|---|---|---|
| A trocken | + | ++ | ++ |
| A konditioniert | + | ++ | + |
| B trocken | ○ | ++ | + |
| B konditioniert | ○ | ++ | + |

Zur Erläuterung dieser Resultate wird auf die Legende zu den Tabellen 1 und 2 verwiesen.

Die vernetzten transparenten Probekörper und LED-Vorsatzlinsen aus GRILAMID TR 90 zeigen bereits ab einer Konzentration von 2 % TAIC und einer Strahlendosis von 66 kGy eine sehr gute Lötfestigkeit. Das heisst, es wurden keine Blasen im oder auf der Oberfläche des Formteils während dem Reflow-Löten festgestellt, welches gemäss dem Joint Industry Standard IPC/JEDEC J-STD-020C durchgeführt wurde. Dazu ist der Verzug des Formteils sehr gering. Um die gleiche Löstfestigkeit beim teilaromatischen FE5577 zu erreichen, bedarf es einer höheren Strahlendosis (99 kGy) und einer TAIC-Konzentration von mindestens 3 %. Insbesondere tritt auch dann keine Blasenbildung beim bleifreien Löten auf, wenn die bestrahlten Formteile gemäss Joint Industry Standard IPC/JEDEC J-STD-020C, MSL2 konditioniert wurden. Die erfindungsgemäss verwendete Strahlendosis ist grösser als 50 kGy, bevorzugt wird mit einer Dosis im Bereich zwischen 60 und 100 kGy gearbeitet.

Die Vorsatzlinsen wurden wie üblich separat in eigenen Werkzeugen gespritzt und nach dem Bestrahlen auf die LED-Gehäuse aufgesteckt bzw. aufgeklipst. Anschliessend wurden die Vorsatzlinsen verstemmt bzw. vernietet. Alternativ kann die vollständig aufgebaute LED als Einlegeteil in ein Spritzgusswerkzeug eingesetzt werden und dieser LED (ähnlich dem 2-Komponentenspritzgussverfahren) eine Linse, z.B. aus TR 90 oder TR FE5577, im sogenannten "Montagespritzguss" anspritzen. Dies hat den Vorteil, dass die Linse kleiner hergestellt werden kann. Dadurch wird die Massabweichung geringer ausfallen, die optische Ein-/Auskopplung von Licht effizienter sein und es werden keine Wackel- oder Dichtigkeitsprobleme auftreten. Im Allgemeinen wird GRILAMID TR bei niedrigeren Temperaturen verarbeitet als das LED-Reflektorgehäuse aus GRIVORY HT. Reicht je nach Materialwahl die dabei erreichbare Verbundhaftung nicht für eine gute Verbindung aus, dann kann eine Haftschicht und/oder ein Formschluss vorgesehen werden. Hinsichtlich der Verbundhaftung zu GRIVORY HT weist FE5577 Vorteile gegenüber GRILAMID TR 90 auf.

Trotz des Anteils von bis zu 5 % TAIC in der Polyamidformmasse weisen die Linsen mit einer Dichte von ≤ 1.1 g/cm³, mit einem Brechungskoeffizienten von n_{D}²⁰ ≥ 1.50 und mit einer Abbe-Zahl von > 40 sehr gute optische Eigenschaften auf, wie sie sonst nur in unvernetzten Polyamiden erreichbar sind (vgl. EP 0 837 087 B1). Das vorliegende Erfindungsprinzip ermöglicht somit das Herstellen von optischen Linsen für LED, die den Vorgang des bleifreien Lötens praktisch ohne Verzug und Blasenbildung überstehen.

### Beispiele 3, 4, 5 und 6:

Die transparenten Polyamide MACM12 (Grilamid TR 90) und PA MACMI/12 (Molverhältnis: 81:19) wurden in den in der Tabelle 5 angegebenen Zusammensetzungen mit TAIC angerollt und auf einer ENGEL Spritzgussmaschine ES 330/80 bei Zylindertemperaturen im Bereich von 240°C bis 300°C zu Bechern verarbeitet. Diese Becher wiesen eine Höhe von 90 mm, einen oberen Durchmesser von 70 mm, einen unteren Durchmesser von 55 mm und eine Wandstärke von 1.5 mm auf. Anschliessend wurden die Becher spritztrocken in Aluminiumbeutel eingeschweisst und in dieser Form, wie bereits im Beispiel 1 beschrieben, mit Elektronen bestrahlt. Die Gesamtdosis betrug 99 kGy.

**Tabelle 5: Zusammensetzungen und Resultate der Beispiele 3 bis 6**

| **Beispiel** | | **3** | **4** | **5** | **6** |
|---|---|---|---|---|---|
| **Zusammensetzung und Tg der Formmassen** | | | | | |
| MACM12 | [Gew.-%] | 97.0 | 29.1 | 29.4 | 0 |
| MACMI/12 | [Gew.-%] | 0 | 67.9 | 67.6 | 97.0 |
| TAIC | [Gew.-%] | 3.0 | 3.0 | 3.0 | 3.0 |
| Glasübergangstemperatur (Tg) [°C] | | 155 | 180 | 190 | 200 |

| **Ergebnis der Dauertemperaturprüfung** | | | | | |
|---|---|---|---|---|---|
| Unvernetzter Formkörper Temperatur, bei der eine Verformung des Bechers eintritt [°C] | | 183 | 192 | 203 | 206 |
| Vernetzter Formkörper Temperatur, bei der eine Verformung des Bechers eintritt [°C] | | 210 | 230 | 237 | 260 |

Für die nach der Bestrahlung durchgeführte Dauertemperaturprüfung wurde ein Testaufbau, bestehend aus einer Becherfixierung, einer zentralen Lampenaufnahme mit einer Halogenlampe (H11), einem Temperaturfühler und einem Transformator verwendet. Damit die transparenten Becher über die Lampe in die Halterung eingeführt werden konnten, musste der Becherboden jeweils entfernt werden. Die transparenten Becher wurden dann im Testaufbau horizontal so an einer frontseitigen, senkrecht stehenden Platte fixiert, dass der Becherinnenraum einen abgeschlossenen Raum darstellte. Dabei ragte der Leuchtkörper der Halogenlampe durch den offenen Boden des Bechers hindurch vollständig in den Innenraum des Bechers, der mit seinem kleineren Querschnitt zur Lampenfassung hin orientiert war. Durch Einstellen der Lampenspannung konnte deren Leuchtstärke und damit die an der Becherinnenseite wirkende Temperatur eingestellt werden. Bei den hier beschriebenen Versuchen wurde die Transformatorspannung - ausgehend von einer Startspannung von 11.0 Volt - in regelmässigen Intervallen innerhalb von 4 bis 6 Stunden bis auf die Spannung gesteigert, bei der resultierend aus der damit verursachten Temperatursteigerung erste Deformationen am Becher aufgetreten sind. Diese Spannung betrug maximal 19.5 Volt. Die Temperatur wurde über einen Fühler, welcher über eine Bohrung (Durchmesser: 3 mm) im Becher an der Innenseite, senkrecht zur Halogenlampe angebracht war, aufgenommen. Das angegebene Spannungsintervall entsprach einem Temperaturbereich von 125°C bis 260°C am Ort der Messung. Der Versuch wurde jeweils dann abgebrochen, wenn erste Verformungen des Bechers zu beobachten waren. In der Tabelle 5 sind diese Temperaturwerte jeweils für den Becher mit unvernetzter und vernetzter Zusammensetzung eingetragen.

Die Beispiele 3 bis 6, von denen die Beispiele 4 und 5 erfindungsgemäss sind, zeigen deutlich, dass die Wärmeformbeständigkeit im mechanisch unbelasteten Zustand durch Vernetzen um ca. 30°C bis 50°C gesteigert werden kann.

Die erfindungsgemässen Formteile aus transparenten vernetzten Polyamidformmassen können nachträglich mit Hilfe von sogenannten Färbe- oder Funktionsbädern und darin enthaltenen Funktionsadditiven getönt bzw. gefärbt oder dotiert werden. Die Temperatur der dafür verwendeten Tauchbäder bzw. Funktionsbäder liegt unterhalb oder aber auch oberhalb der Glasübergangs- bzw. Glasumwandlungstemperatur (Tg) der (Co)Polyamide. Letzteres ist möglich, da die Formteile auf Grund ihrer Vernetzung ihre Form auch bei über dem Tg-Wert liegenden Temperaturen beibehalten. Falls gemäss einer besonderen Ausführungsform der Erfindung die Formteile getönt bzw. angefärbt werden sollen, kann die Färbung als homogene Färbung oder als Gradientenfärbung ausgeführt werden.

Mit Hilfe von Tauchbad-Zusätzen, die eine geeignete Kombination von Glykolen umfassen und mittels einem speziellen Tauchverfahren werden gemäss der deutschen Patentanmeldung DE 102005017321.7 des aktuellen Anmelders homogene Farbverteilungen in einem Formteil oder in einem ein solches Formteil umfassenden Werkstoffverbund erhalten. Dabei können tiefe Haze-Werte (Trübungswerte) von ≤ 1 % bei Farbtiefen mit einer Lichttransmission von 10 bis 93 %, bevorzugt von 10 bis 80 %, besonders bevorzugt von 10 - 60 % erreicht werden, wobei jeweils eine hochglänzende, einwandfreie Oberfläche des Formteils erhalten bleibt. Mit Hilfe von geeigneten Grundfarben können so alle Farbtöne bis grau eingestellt werden.

Die eingefärbten Formteile oder Werkstoffverbunde können ohne Ausbluten der Farbe in üblichen Tauchbädern mit Primern und Hartlack überzogen werden, die thermisch oder mit UV-Strahlung ausgehärtet werden. Ebenso können Schichten zur Antireflexausrüstung oder Antibeschlagausrüstung aufgetragen werden. Die Haftung dieser Schichten wird nicht beeinträchtigt. Es können nach der Tauchfärbung auch Polarisationsfolien aufgeklebt werden, die danach mit Hardcoat- und Antireflex-Schichten und oder Antibeschlagschichten veredelt werden.

Mit diesem Verfahren ist es ebenfalls möglich, in Formkörper, wie z. B. in Folien oder in Platten, Funktionsadditive einzudotieren. Solche Funktionsadditive umfassen UV-Additive, fotochrome oder thermochrome Additive, kontrastverstärkende Additive und Additive, die den Brechungsindex beeinflussen.

Für transparente Werkstoffe in Aussenanwendungen wird zunehmend eine Undurchlässigkeit für schädigende UV-Strahlung verlangt. Dies betrifft vor allem UV-Strahlung mit einer Wellenlänge, die unterhalb von 430 nm, insbesondere unterhalb von 400 nm oder gar unterhalb von 385 nm liegt. Eine solche Undurchlässigkeit kann bei transparenten Polyamidformteilen dadurch erreicht werden, dass übliche UV-Absorber, insbesondere in Form von mit Chlor aktivierten Benztriazolen, wie beispielsweise Tinuvin 326, Tinuvin 327 oder Derivaten davon, in die Polyamidformmasse eingearbeitet werden. Bewährt haben sich auch Mischungen mit sogenannten "Hindered Amine Light Stabilizers" (HALS)-Additiven.

Die Kombination von optischen Aufhellern und UV-Absorbern führt zu verbessertem Aussehen der Polyamidformteile mit gleichzeitiger Schutzwirkung gegen schädigende UV-Strahlung. Da verschiedene UV-Schutzklassen am Markt gefordert werden, ist es vorteilhaft, den UV-Schutz über einen geeigneten Masterbatch direkt vor der Formteilherstellung dazugeben. Je nach Menge und Art des UV-Masterbatches kann die Lichttransmission für ein Schutzklasse direkt eingestellt werden die Wellenlängen von 385 nm, von 400 nm oder höher entspricht.

Weitere Additive können der erfindungsgemäss zu vernetzenden Polyamidformmasse zugesetzt werden. Solche Zusatzstoffe umfassen:
- Weitere Polymere, wie z.B. polymere Fliesshilfsmittel (vgl. z.B. EP 1 120 443 A2), polymere Flammschutzmittel oder Schlagzähmodifikatoren, etwa isorefraktiv gepfropfte Kern-Schale-Polymere;
- Füllstoffe bzw. Verstärkungsstoffe, wie z.B. isorefraktive Glasfasern oder Glaskugeln sowie nanoskalige anorganische Materialien, wie z.B. ultrafeine Kreide mit einer mittleren Partikelgrösse von maximal 100 nm und bevorzugt von maximal 80 nm oder organisch modifizierte Schichtsilikate mit einer mittleren Partikelgrösse von maximal 100 nm (vgl. die europäische Patentanmeldung EP 1 416 010 A2 des gleichen Anmelders) sowie nanoskalige Metalloxide, insbesondere nanoskaliges TiO₂.
- Pigmente, andere Farbmittel, Weichmacher, Antistatika, Entformungshilfen, Fliessmittel, Flammschutzmittel und dergleichen.

Die Formteile werden beispielsweise zur Herstellung optischer Körper verwendet. Optische Körper sind solche, durch die Licht hindurchtritt, die Licht reflektieren oder absorbieren. Dieses Licht kann z.B. gebündelt, konvergierend oder divergierend durchtreten, reflektiert oder absorbiert werden und auf der Austrittseite des Formteils von Auge wahrgenommen werden oder einen von Auge wahrnehmbaren Effekt bewirken. Beispielsweise sind solche Formteile optische Linsen für Brillen, insbesondere Sonnenbrillen, Kameras, Ferngläser, Lupen, Mikroskope, elektrooptische Mess- und Prüfgeräte, optische Filter, Scheinwerferlinsen, insbesondere Linsen in den Abdeckungen für die Fahrbeleuchtung von Automobilen und anderen Fahrzeugen, Lampenlinsen, Linsen für Projektoren und Beamer, Sichtfenster, Schaugläser, Schutzscheiben und -visiere sowie Sonnenschutzdächer und Verglasungen im Bau- oder Automobilsektor. Daneben können transparente Formteile, Fasern oder Folien für vielfältige Anwendungen hergestellt werden, wie Lebensmittel-, Arzneimittel- und Kosmetikverpackungen oder Folien für die Landwirtschaft bzw. den Gartenbau. Ausserdem können Schutzschichten auf den meisten der erwähnten Formteile aus der erfindungsgemäss vernetzten, transparenten Polyamidformmasse, beispielsweise durch Laminieren oder Hinterspritzen hergestellt werden.

## Patentansprüche

1. Vernetzte, aus einer thermoplastischen Polyamidformmasse hergestellte, transparente Polyamidformteile, wobei die Polyamide dieser Polyamidformmasse ausgewählt sind aus einer Gruppe, die aus amorphen oder mikrokristallinen Polyamiden, aus Copolyamiden derselben und deren Blends sowie aus Blends aus solchen Polyamiden mit teilkristallinen Polyamiden, besteht, **dadurch gekennzeichnet, dass** die Polyamidformmasse einen transparenten Blend aus
- transparenten amorphen oder transparenten mikrokristallinen Polyamiden bzw. aus Copolyamiden derselben
- und bis zu 40 Gew.-% eines teilkristallinen Polyamids
umfasst, die Polyamidformteile ein Vernetzungsadditiv umfassen, das wegen einer energiereichen Bestrahlung der Polyamidformmasse mit deren Polyamiden vernetzt ist, die einen im wesentlichen linearen Aufbau und deren Monomere keine olefinischen C=C - Doppelbindungen aufweisen, wobei diese Polyamidformteile einen Tg-Wert von > 140 °C und bei Temperaturen von ≥ 180 °C eine Formbeständigkeit von mindestens 90 % aufweisen, und wobei eine Transmission für eine Wellenlänge von 540 nm mindestens 70 % beträgt, wenn ein Polyamidformteil in Form eines Plättchens mit einer Dicke von 2 mm vorliegt.

2. Vernetzte, transparente Polyamidformteile gemäss Anspruch 1, **dadurch gekennzeichnet, dass** das teilkristalline Polyamid PA 12 umfasst.

3. Vernetzte, transparente Polyamidformteile gemäss Anspruch 1 oder 2, **dadurch gekennzeichnet, dass** der Blend PA MACM12 und bis zu 40 Gew.-%, insbesondere bis zu 20 Gew.-%, PA 12 umfasst.

4. Vernetzte, transparente Polyamidformteile nach einem der vorangehenden Ansprüche, **dadurch gekennzeichnet, dass** der Anteil des Vernetzungsadditivs bis zu 10 Gew.-%, bevorzugt bis zu 7 Gew.-% und speziell bevorzugt bis zu 4 Gew.-% der Polyamidformmasse beträgt.

5. Vernetzte, transparente Polyamidformteile nach einem der vorangehenden Ansprüche, **dadurch gekennzeichnet, dass** das Vernetzungsadditiv Triallylisocyanurat (TAIC) ist und dessen Anteil 1 bis 5 Gew.-% der Polyamidformmasse beträgt.

6. Vernetzte, transparente Polyamidformteile nach Anspruch 5, **dadurch gekennzeichnet, dass** das Vernetzungsadditiv Triallylisocyanurat vor der formgebenden Verarbeitung den verwendeten Polyamiden zudosiert wurde.

7. Vernetzte, transparente Polyamidformteile nach einem der vorangehenden Ansprüche, **dadurch gekennzeichnet, dass** die Polyamidformmasse Polyamide umfasst, die aus cycloaliphatischen Diaminen und aliphatischen Dicarbonsäuren mit 6 bis 36 C-Atomen aufgebaut sind.

8. Vernetzte, transparente Polyamidformteile nach Anspruch 7, **dadurch gekennzeichnet, dass** die Polyamidformmasse Polyamide umfasst, die aus PACM und/oder MACM und aliphatischen Dicarbonsäuren aufgebaut sind, wobei die aliphatischen Dicarbonsäuren ausgewählt sind aus einer Gruppe, die 10, 12, 13, 14 oder 18 C-Atome aufweist.

9. Vernetzte, transparente Polyamidformteile nach einem der Ansprüche 1 bis 6, **dadurch gekennzeichnet, dass** die Polyamidformmasse Polyamide umfasst, die aus aromatischen Dicarbonsäuren mit 8 bis 18 C-Atomen und aliphatischen oder cycloaliphatischen Diaminen aufgebaut sind.

10. Vernetzte, transparente Polyamidformteile nach Anspruch 9, **dadurch gekennzeichnet, dass** die aromatischen Dicarbonsäuren TPS oder IPS sind.

11. Vernetzte, transparente Polyamidformteile nach einem der Ansprüche 1 bis 6, **dadurch gekennzeichnet, dass** die Polyamidformmasse Polyamide umfasst, die aus Lactamen und/oder Aminocarbonsäuren aufgebaut sind.

12. Vernetzte, transparente Polyamidformteile nach einem der Ansprüche 1 bis 6, **dadurch gekennzeichnet, dass** die Polyamidformmasse Polyamide umfasst, die aus einem Diamin mit einem aromatischen Kern und aus Dicarbonsäuren mit aliphatischer Struktur aufgebaut sind.

13. Vernetzte, transparente Polyamidformteile gemäss einem der Ansprüche 1 bis 3, **dadurch gekennzeichnet, dass** sie strukturelle Bauteile sind, die trotz einer Temperatureinwirkung von über 200 °C ihre Formbeständigkeit mindestens zu 95 % behalten.

14. Vernetzte, transparente Polyamidformteile gemäss einem der Ansprüche 1 bis 3, **dadurch gekennzeichnet, dass** sie optische Bauteile sind, die trotz einer Temperatur von 260 °C ihre Transparenz und ihre Formbeständigkeit zu mindestens 90 % behalten.

15. Vernetzte, transparente Polyamidformteile gemäss Anspruch 14, **dadurch gekennzeichnet, dass** die optischen Bauteile eine Transmission von über 70%, bevorzugt von über 80% und insbesondere von über 85% aufweisen.

16. Vernetzte, transparente Polyamidformteile gemäss Anspruch 14 oder 15, **dadurch gekennzeichnet, dass** diese optischen Bauteile trotz einer zeitweisen Temperaturbelastung von 260 °C einen Brechungskoeffizienten von mindestens 1.50, eine Abbe-Zahl von mindestens 40 und eine Dichte von höchstens 1.1 g/cm³ aufweisen.

17. Vernetzte, transparente Polyamidformteile gemäss einem der Ansprüche 14 bis 16, **dadurch gekennzeichnet, dass** diese Bauteile optische Linsen für LED sind, welche vor dem bleifreien Löten der LED an einer Leiterplatte befestigt werden.

18. Vernetzte, transparente Polyamidformteile gemäss einem der Ansprüche 1 bis 17, **dadurch gekennzeichnet, dass** diese Bauteile mittels Spritzguss oder Extrusion hergestellt sind.

19. Vernetzte, transparente Polyamidformteile gemäss einem der Ansprüche 1 bis 18, **dadurch gekennzeichnet, dass** die Glasübergangstemperatur (Tg) dieser Polyamidformteile höher als 150 °C und bevorzugt höher als 170 °C ist.

20. Vernetzte, transparente Polyamidformteile gemäss einem der Ansprüche 1 bis 3, 18 oder 19, **dadurch gekennzeichnet, dass** diese Bauteile Lichtreflektierbauteile für Fahrzeuge sind und eine Glasübergangstemperatur (Tg) von mindestens 180 °C aufweisen.

## Claims

1. Crosslinked transparent polyamide molded parts made from a thermoplastic polyamide molding material, wherein the polyamides of this polyamide molding material are selected from a group consisting of amorphous or microcrystalline polyamides, of copolyamides thereof and their blends and of blends of such polyamides with semicrystalline polyamides, **characterized in that** the polyamide molding material comprises a transparent blend of
- transparent amorphous or transparent microcrystalline polyamides or copolyamides thereof
- and up to 40% by weight of a semicrystalline polyamide,
which polyamide molded parts comprise a crosslinking additive which is crosslinked with polyamides thereof due to high-energy irradiation of the polyamide molding material, which polyamides have a substantially linear structure and whose monomers have no olefinic C=C double bonds, wherein these polyamide molded parts have a Tg value of > 140°C and a dimensional stability of at least 90% at temperatures of ≥ 180°C, and wherein a transmission for a wavelength of 540 nm is at least 70% when a polyamide molded part is in the form of a platelet having a thickness of 2 mm.

2. Crosslinked transparent polyamide molded parts according to claim 1, **characterized in that** the semicrystalline polyamide comprises PA 12.

3. Crosslinked transparent polyamide molded parts according to claim 1 or 2, **characterized in that** the blend comprises PA MACM12 and up to 40% by weight, in particular up to 20% by weight, PA 12.

4. Crosslinked transparent polyamide molded parts according to one of the preceding claims, **characterized in that** the proportion of the crosslinking additive is up to 10% by weight, preferably up to 7% by weight and especially preferably up to 4% by weight of the polyamide molding material.

5. Crosslinked transparent polyamide molded parts according to one of the preceding claims, **characterized in that** the crosslinking additive is triallyl isocyanurate (TAIC) and its proportion is 1 to 5% by weight of the polyamide molding material.

6. Crosslinked transparent polyamide molded parts according to claim 5, **characterized in that** the crosslinking additive triallyl isocyanurate was added to the polyamides used before the shaping processing.

7. Crosslinked transparent polyamide molded parts according to one of the preceding claims, **characterized in that** the polyamide molding material comprises polyamides which are composed of cycloaliphatic diamines and aliphatic dicarboxylic acids having 6 to 36 carbon atoms.

8. Crosslinked transparent polyamide molded parts according to claim 7, **characterized in that** the polyamide molding material comprises polyamides which are composed of PACM and/or MACM and aliphatic dicarboxylic acids, wherein the aliphatic dicarboxylic acids are selected from a group which has 10, 12, 13, 14 or 18 carbon atoms.

9. Crosslinked transparent polyamide molded parts according to one of claims 1 to 6, **characterized in that** the polyamide molding material comprises polyamides which are composed of aromatic dicarboxylic acids having 8 to 18 carbon atoms and aliphatic or cycloaliphatic diamines.

10. Crosslinked transparent polyamide molded parts according to claim 9, **characterized in that** the aromatic dicarboxylic acids are TPS or IPS.

11. Crosslinked transparent polyamide molded parts according to one of claims 1 to 6, **characterized in that** the polyamide molding material comprises polyamides which are composed of lactams and/or aminocarboxylic acids.

12. Crosslinked transparent polyamide molded parts according to one of claims 1 to 6, **characterized in that** the polyamide molding material comprises polyamides which are composed of a diamine having an aromatic nucleus and of dicarboxylic acids having an aliphatic structure.

13. Crosslinked transparent polyamide molded parts according to one of claims 1 to 3, **characterized in that** they are structural components which retain at least 95% of their dimensional stability despite exposure to temperatures in excess of 200°C.

14. Crosslinked transparent polyamide molded parts according to one of claims 1 to 3, **characterized in that** they are optical components which retain at least 90% of their transparency and dimensional stability despite a temperature of 260°C.

15. Crosslinked transparent polyamide molded parts according to claim 14, **characterized in that** the optical components have a transmission of more than 70%, preferably more than 80% and in particular more than 85%.

16. Crosslinked transparent polyamide molded parts according to claim 14 or 15, **characterized in that** these optical components have a refractive index of at least 1.50, an Abbe number of at least 40 and a density of at most 1.1 g/cm³ despite a temporary temperature load of 260°C.

17. Crosslinked transparent polyamide molded parts according to one of claims 14 to 16, **characterized in that** these components are optical lenses for LEDs which are fixed to a printed circuit board before the lead-free soldering of the LED.

18. Crosslinked transparent polyamide molded parts according to one of claims 1 to 17, **characterized in that** these components are manufactured by injection molding or extrusion.

19. Crosslinked transparent polyamide molded parts according to one of claims 1 to 18, **characterized in that** the glass transition temperature (Tg) of these polyamide molded parts is higher than 150°C and preferably higher than 170°C.

20. Crosslinked transparent polyamide molded parts according to one of claims 1 to 3, 18 or 19, **characterized in that** these components are light-reflecting components for vehicles and have a glass transition temperature (Tg) of at least 180°C.

## Revendications

1. Pièces moulées en polyamide transparentes réticulées fabriquées à partir d'une matière à mouler polyamide thermoplastique, les polyamides de cette matière à mouler polyamide étant choisis à partir d'un groupe qui est composé de polyamides amorphes ou microcristallins, de copolyamides de ces derniers et de mélanges de ces derniers, ainsi que de mélanges de tels polyamides avec des polyamides partiellement cristallins, **caractérisées en ce que** la matière à mouler polyamide comprend un mélange transparent de
- polyamides amorphes transparents ou microcristallins transparents et de copolyamides de ces derniers
- et jusqu'à 40 % en poids d'un polyamide partiellement cristallin,
**en ce que** les pièces moulées en polyamide comprennent un additif de réticulation qui est réticulé avec les polyamides de ces dernières sous l'effet d'un rayonnement énergétique de la matière à mouler polyamide, lesquels polyamides présentant une structure essentiellement linéaire et leurs monomères ne présentant pas de liaisons doubles C=C oléfiniques, ces pièces moulées en polyamide présentant une valeur Tg > 140 °C et présentant à des températures ≥ 180 °C une stabilité de forme d'au moins 90 %, et la transmission pour une longueur d'ondes de 540 nm étant d'au moins 70 % s'il s'agit d'une pièce moulée en polyamide sous la forme d'une petite plaque de 2 mm d'épaisseur.

2. Pièces moulées en polyamide transparentes réticulées selon la revendication 1, **caractérisées en ce que** le polyamide partiellement cristallin comprend du PA 12.

3. Pièces moulées en polyamide transparentes réticulées selon la revendication 1 ou 2, **caractérisées en ce que** le mélange comprend du PA MACM12 et jusqu'à 40 % en poids, en particulier jusqu'à 20 % en poids de PA 12.

4. Pièces moulées en polyamide transparentes réticulées selon l'une des revendications précédentes, **caractérisées en ce que** la part de l'additif de réticulation est jusqu'à 10 % en poids, de préférence jusqu'à 7 % en poids et de façon particulièrement préférée jusqu'à 4 % en poids de la matière à mouler polyamide.

5. Pièces moulées en polyamide transparentes réticulées selon l'une des revendications précédentes, **caractérisées en ce que** l'additif de réticulation est de l'isocyanurate de triallyle (TAIC) et dont la part représente de 1 à 5 % en poids de la matière à mouler polyamide.

6. Pièces moulées en polyamide transparentes réticulées selon la revendication 5, **caractérisées en ce que** l'additif de réticulation isocyanurate de triallyle a été introduit avant le façonnage des polyamides utilisés.

7. Pièces moulées en polyamide transparentes réticulées selon l'une des revendications précédentes, **caractérisées en ce que** la matière à mouler polyamide comprend des polyamides qui sont constitués de diamines cycloaliphatiques et d'acides dicarboxyliques aliphatiques avec 6 à 36 atomes C.

8. Pièces moulées en polyamide transparentes réticulées selon la revendication 7, **caractérisées en ce que** la matière à mouler polyamide comprend des polyamides qui sont constitués de PACM et/ou MACM et d'acides dicarboxiliques aliphatiques, les acides dicarboxyliques aliphatiques étant choisis à partir d'un groupe qui présente 10, 12, 13, 14 ou 18 atomes C.

9. Pièces moulées en polyamide transparentes réticulées selon l'une des revendications 1 à 6, **caractérisées en ce que** la matière à mouler polyamide comprend des polyamides qui sont constitués d'acides dicarboxyliques aromatiques avec 8 à 18 atomes C et de diamines aliphatiques ou cycloaliphatiques.

10. Pièces moulées en polyamide transparentes réticulées selon la revendication 9, **caractérisées en ce que** les acides dicarboxyliques aromatiques sont du TPS ou IPS.

11. Pièces moulées en polyamide transparentes réticulées selon l'une des revendications 1 à 6, **caractérisées en ce que** la matière à mouler polyamide comprend des polyamides qui sont constitués de lactames et/ou d'acides aminocarboxyliques.

12. Pièces moulées en polyamide transparentes réticulées selon l'une des revendications 1 à 6, **caractérisées en ce que** la matière à mouler polyamide comprend des polyamides qui sont constitués d'une diamine avec un noyau aromatique et d'acides dicarboxyliques avec une structure aliphatique.

13. Pièces moulées en polyamide transparentes réticulées selon l'une des revendications 1 à 3, **caractérisées en ce qu'**il s'agit d'éléments structurels qui, malgré un effet thermique de plus de 200 °C, conservent leur stabilité de forme à au moins 95 %.

14. Pièces moulées en polyamide transparentes réticulées selon l'une des revendications 1 à 3, **caractérisées en ce qu'**il s'agit d'éléments optiques qui, malgré une température de 260 °C, conservent leur transparence et leur stabilité de forme à au moins 90 %.

15. Pièces moulées en polyamide transparentes réticulées selon la revendication 14, **caractérisées en ce que** les éléments optiques présentent une transmission de plus de 70 %, de préférence de plus de 80 % et en particulier de plus de 85 %.

16. Pièces moulées en polyamide transparentes réticulées selon la revendication 14 ou 15, **caractérisées en ce que** ces éléments optiques présentent, malgré une charge de température temporaire de 260 °C, un indice de réfraction d'au moins 1.50, un nombre d'Abbe d'au moins 40 et une densité de maximum 1.1 g/cm³.

17. Pièces moulées en polyamide transparentes réticulées selon l'une des revendications 14 à 16, **caractérisées en ce que** ces éléments sont des lentilles optiques pour LED qui sont fixées à un circuit imprimé avant le brasage sans plomb des LED.

18. Pièces moulées en polyamide transparentes réticulées selon l'une des revendications 1 à 17, **caractérisées en ce que** ces éléments sont fabriqués par moulage par injection ou par extrusion.

19. Pièces moulées en polyamide transparentes réticulées selon l'une des revendications 1 à 18, **caractérisées en ce que** la température de transition vitreuse (Tg) de ces pièces moulées en polyamide est supérieure à 150 °C et de préférence supérieure à 170 °C.

20. Pièces moulées en polyamide transparentes réticulées selon l'une des revendications 1 à 3, 18 ou 19, **caractérisées en ce que** ces éléments sont des éléments réfléchissants pour véhicules et présentent une température de transition vitreuse (Tg) d'au moins 180 °C.
